# FASCICULE DE BREVET EUROPEEN

(11) **EP 0 935 589 B1**
(45) Date de publication et mention de la délivrance du brevet: **14.05.2003**
(21) Numéro de dépôt: 98941478.4
(22) Date de dépôt: 29.07.1998
(51) Int. Cl.: C03C 17/22, C03C 17/34

(54) **SUBSTRAT TRANSPARENT MUNI D'AU MOINS UNE COUCHE REFLECHISSANTE ET SON PROCEDE D'OBTENTION**
DURCHSICHTIGES SUBSTRAT MIT MINDESTENS EINER REFLEKTIERENDEN SCHICHT UND VERFAHREN ZUR HERSTELLUNG
TRANSPARENT SUBSTRATE PROVIDED WITH AT LEAST ONE REFLECTING COATING AND METHOD FOR OBTAINING SAME

(30) Priorité: 31.07.1997 FR 9709771
(43) Date de publication de la demande: 18.08.1999
(73) Titulaire: SAINT-GOBAIN GLASS FRANCE, 92400 Courbevoie (FR)
(72) Inventeur: JORET, Laurent, F-75011 Paris (FR)
(74) Mandataire: Muller, René
(86) Numéro de dépôt international: FR9801677
(87) Numéro de publication internationale: WO99006335

(56) Documents cités:
- EP-A- 0 546 302
- EP-A- 0 638 527
- WO-A-84/02128
- US-A- 3 885 855
- D.C. FRANCOIS ET AL.: "reflectivity of scnx thin films: comparison with tinx,tinxcy and zrnx coatings and application to the photothermal conversion of solar energy" THIN SOLID FILMS., vol. 127, no. 3/4, mai 1985, pages 205-214, XP002064045 LAUSANNE CH
- DATABASE WPI Section Ch, Week 8414 Derwent Publications Ltd., London, GB; Class L01, AN 84-082567 XP002064046 & DD 204 693 A (BOLLINGER H) , 7 décembre 1983
- CHEMICAL ABSTRACTS, vol. 116, no. 16, 20 avril 1992 Columbus, Ohio, US; abstract no. 157366k, page 347; XP000387010 & JP 03 275533 A (NIPPON SHEET GLASS COMPANY LTD) 6 décembre 1991

## Description

La présente invention est relative à un substrat transparent muni d'au moins une couche réfléchissant au moins une partie du rayonnement solaire, dans les longueurs d'onde du domaine du visible et/ou de l'infra-rouge, notamment déposée à chaud, en particulier en continu à la surface d'un ruban de verre d'une installation float.

Une couche réfléchissante peut, en fonction de son épaisseur conférer à un substrat transparent, notamment en verre, des propriétés différentes :
- à faible épaisseur, elle joue le rôle d'une couche protectrice contre le rayonnement solaire et/ou d'une couche bas émissive ;
- à épaisseur plus importante, elle donne au substrat un rôle de miroir à très forte réflexion lumineuse.

Il est connu qu'un type de couche mince particulièrement adapté pour être une couche réfléchissante est une couche mince de nitrure métallique, telle qu'une couche de nitrure de titane.

Plusieurs techniques existent pour déposer ce type de couche sur des substrats.

Certaines techniques utilisent le vide du type pulvérisation cathodique assistée par champ magnétique, technique très efficace en termes de qualité de dépôt mais coûteuse en matériel. En outre, elle ne peut pas fonctionner en continu sur le ruban de verre float.

D'autres techniques ont recours à une réaction de pyrolyse.

Elles consistent à projeter des « précurseurs », par exemple de nature organo-métallique, soit sous forme gazeuse, soit sous forme pulvérulente, soit liquides par eux-mêmes ou encore en solution dans un liquide, à la surface d'un substrat porté a haute température

Lesdits précurseurs, à son contact, s'y décomposent en ladite couche de nitrure métallique précitée.

Il est ainsi connu des demandes de brevet EP-0 638 527 et EP-0 650 938 des couches de nitrure de titane TiN obtenues par une technique de pyrolyse en phase gazeuse.

La publication « Reflectivity of S_{c}Nₓ thin films : comparison with TiN_{z}C_{y} and ZrN, coatings and application in the photo-thermal conversion of solar energy » de D.C. FRANCOIS et Al (Thin Solid Films - vol. 127 - n° 314 - mai 1995 - pages 105-214) concerne des couches en nitrure ou carbonitrure de zirconium déposées par pulvérisation cathodique pour constituer des couches absorbantes pour cellules photoélectriques.

Le brevet US-3 885 855 concerne un vitrage anti-solaire muni d'une couche en nitrure métallique, notamment en ZrN. La demande de brevet WO84/02128 concerne le dépôt par pyrolyse en phase gazeuse de nitrure métallique du type TiN à partir de précurseur métallique et d'ammoniac.

La demande de brevet EP-546 302 A1 décrit des vitrages munis d'une couche de contrôle solaire pouvant être en nitrure de zirconium.

Le résumé DATABASE WPI - section 14 - week 8414 DERWENT publications du brevet DD-204 693 A, décrit des couches de nitrure de métal du type ZrN déposées sous vide et dont on peut moduler le taux de nitruration.

Le résumé du CHEMICAL ABSTRACTS - vol. 116 - 20 avril 1992 - n° 157366k - page 347 du brevet JP-03 275 533 décrit des vitrages munis de couches anti-solaires à base de nitrure métallique comme ZrN.

La demande de brevet EP-638 577 A1 concerne l'obtention de couches de nitrure métallique du type TiN par pyrolyse en phase gazeuse.

Dans nombre d'applications telles que les vitrages pour bâtiment, ces couches confèrent des performances anti-solaires globalement satisfaisantes alliées à de très bonnes caractéristiques colorimétriques.

Dans d'autres applications, les performances optiques et/ou énergétiques des substrats revêtus de ces couches peuvent encore être améliorées.

Ainsi, dans les applications où l'on ne requiert pas un niveau élevé de transmission lumineuse, telles que les toits en verre pour véhicules automobiles, le niveau de réflexion énergétique atteint peut être augmenté.

Dans une application miroir où l'on requiert un niveau de réflexion lumineuse très élevé, l'aspect en réflexion peut être encore plus neutre.

Il est connu par ailleurs, notamment du document « Optical Coatings for Energy Efficiency and Solar Applications » 1982 - pages 52-57, qu'un type de nitrure métallique présentant intrinsèquement des propriétés optiques et énergétiques accrues par rapport au nitrure de titane est le nitrure de zirconium ZrN.

Il est ainsi connu notamment des documents « Solar Energy Materials 7 » - 1983 - pages 401-404 et « Chemical Materials » - 1981 - pages 1138-1148, un type de couche mince à base de nitrure de zirconium déposé sur un substrat par une technique de pyrolyse en phase gazeuse, à partir de deux précurseurs, le précurseur de zirconium étant le tétrachlorure de zirconium ZrCl4, le précurseur azoté étant soit l'ammoniac, soit un mélange N₂/H₂.

Les températures auxquelles on effectue ce dépôt sont trop hautes (aux alentours de 1000°C) pour pouvoir être compatibles avec un dépôt en continu sur un ruban de verre silico-sodo-calcique dans l'enceinte d'un bain float car, à ces températures, ces verres standards n'ont pas atteint leur stabilité dimensionnelle.

Le but de l'invention est alors de mettre au point un nouveau type de substrat transparent à couche à propriété réfléchissante, dont la fabrication puisse être réalisée à chaud, en continu, notamment sur un ruban de verre float, et qui présente en outre des performances optiques et/ou énergétiques accrues.

Pour ce faire, l'invention a pour objet un procédé de dépôt sur un substrat transparent en verre, d'au moins une couche mince à base de nitrure de zirconium, réfléchissant au moins une partie du rayonnement solaire dans les longueurs d'onde du domaine du visible et/ou de l'infrarouge et déposée à chaud, par pyrolyse en phase gazeuse à partir d'au moins un précurseur de zirconium et au moins un précurseur d'azote. le précurseur d'azote étant sous la forme d'une amine secondaire ou tertiaire et l'épaisseur de la couche étant inférieure à 80 nm.

Selon l'invention, le nitrure métallique comprend du nitrure de zirconium au moins en partie cristallisé.

Par « déposée à chaud », il faut comprendre ici et dans la suite du texte, le fait que le dépôt s'effectue à une température d'au moins 350 à 400°C, notamment de 450 à 800°C, soit les températures rencontrées sur une ligne dont est issu un ruban de verre float en continu, tout particulièrement dans l'enceinte de flottage.

De même, il faut comprendre par « les longueurs d'onde du domaine du visible », les longueurs d'onde comprise entre 0,38 µm et 0,78 µm.

Selon une caractéristique additionnelle, la résistivité électrique de la couche mince est comprise entre 1 et 300 µΩ-cm, de préférence entre 10 et 200 µΩ-cm, avantageusement entre 50 et 150 µΩ-cm.

Une telle gamme de résistivité électrique permet de filtre de manière considérable le rayonnement énergétique, même dans les configurations où l'épaisseur géométrique de la couche est très faible.

Avantageusement, lorsque celle-ci est de l'ordre de 40 nanomètres, ledit substrat mince présente un coefficient de réflexion énergétique R_{E} supérieur à 40%.

Selon une autre caractéristique, la couche mince selon l'invention possède une longueur d'onde plasma supérieure aux couches de nitrure métallique connues telles que le TiN, ce qui confère au substrat qui en est muni un aspect en réflexion particulièrement neutre.

L'application du substrat envisagée détermine l'épaisseur de la couche mince selon l'invention qu'il est souhaitable de déposer.

Pour une utilisation du substrat en tant que vitrage autorisant la vision, par exemple présentant des valeurs de transmission lumineuse d'au moins 10 %, en particulier lorsqu'une fonction de protection solaire ou de bas-émissivité est recherchée, la couche mince selon l'invention présente une épaisseur géométrique inférieure à 80 nm, notamment comprise entre 10 et 50 nm.

Pour une application miroir, l'épaisseur doit être suffisamment importante pour qu'à elle seule elle permette d'augmenter la réflexion lumineuse du substrat jusqu'à des valeurs d'au moins 60 %, notamment d'au moins 70 %. Pour atteindre ces valeurs, l'épaisseur géométrique est alors de préférence supérieure à 80 nm, notamment comrise entre 100 et 300 nm.

Des épaisseurs trop importantes n'apportent en effet rien de plus d'un point de vue de la réflexion lumineuse, elles nécessitent simplement une durée de dépôt plus longue, ce qui rend le dépôt en lui-même plus coûteux.

Les miroirs ainsi constitués peuvent être utilisés en « face 1 », c'est-à-dire disposés de façon telle que la couche réfléchissante selon l'invention se trouve du côté du substrat où se trouve l'observateur. Ils peuvent aussi être utilisés en « face 2 », c'est-à-dire disposés de telle façon que la couche selon l'invention se trouve du côté du substrat opposé à celui où se trouve l'observateur. Dans cette deuxième configuration, il peut être prévu de recouvrir l'empilement de couches d'un revêtement protecteur opacifiant, telle qu'une couche d'émail ou une laque à base de polymère(s). Il peut être également prévu un revêtement protecteur transparent sous la forme d'une laque ou d'un film de polymère transparent.

De manière préférée, la couche mince selon l'invention est surmontée d'un premier type de revêtement. Celui-ci comprend une première surcouche en matériau diélectrique, comme de l'oxyde, oxycarbure, nitrure, oxynitrure ou oxycarbonitrure de silicium ayant une épaisseur géométrique de préférence comprise entre 5 et 200 nm, notamment entre 20 et 150 nm et un indice de réfraction de préférence compris entre 1,5 et 2,2, notamment entre 1,6 et 2.

Une telle surcouche de caractéristiques appropriées en terme d'épaisseur et d'indice de réfraction protège la couche selon l'invention de l'oxydation pendant la fabrication, par exemple à la sortie du bain float, et permet également de régler l'aspect en réflexion, plus particulièrement dans les couleurs agréables bleues-vertes sans pour autant modifier la couleur en transmission.

Cette surcouche permet enfin d'effectuer sur le substrat en verre des traitements thermiques à haute température du type bombage ou trempe. En effet, de tels traitements thermiques se font en atmosphère ambiante, c'est-à-dire oxydante : la surcouche protège alors efficacement de l'oxydation la couche selon l'invention sans pour autant la détériorer.

Alternativement ou cumulativement pour ce premier type de revêtement, une deuxième surcouche peut être envisagée. Il peut s'agir par exemple :
- d'une couche à base de nitrure de silicium Si₃N₄, telle que celle décrite dans la demande de brevet EP 0 857 700, qui par sa capacité à résister à l'abrasion mécanique et ses qualités optiques très satisfaisantes peut protéger efficacement la couche selon l'invention en conférant au substrat une fonctionnalité anti-rayure sans pour autant interférer optiquement.
- d'une couche à base de TiO₂, telle que celle décrite dans la demande de brevet FR 2 738 812, dont la durabilité et les propriétés photocatalytiques confèrent au substrat muni de la couche selon l'invention une fonctionnalité antibuée et/ou anti-salissure durable dans le temps,
- d'une couche à base d'oxyde d'étain dopé au fluor SnO₂ : F, telle que celle décrite dans la demande de brevet EP 0 573 325 ou EP 0 629 629.

On peut donc avoir des empilements du type :
- verre/couche mince (2)/SiOₓN_{y}C_{z} et/ou TiO₂ et/ou Si₃N₄ et/ou SnO₂: F, avec x≥0 et y≥0.

Comme deuxième type de revêtement, on peut également avoir des empilements du type :
- verre/couche mince (2)/Si₃N₄ et/ou TiO₂ et/ou ZrO₂ et/ou SiOₓN_{Y}C_{z} avec x>0.

L'invention a également pour objet le procédé d'obtention du substrat précédemment défini, procédé qui consiste à déposer la couche mince à base de nitrure métallique par une technique de pyrolyse en phase gazeuse (appelée aussi « Chemical Vapor Deposition » en anglais ou CVD), qui utilise au moins un précurseur de zirconium et au moins un précurseur d'azote.

Selon le procédé de l'invention, au moins un précurseur d'azote est une amine.

Le choix d'un tel précurseur azoté est particulièrement avantageux : il est d'une réactivité adéquate dans la mesure où il permet d'effectuer le dépôt à des températures où le substrat en verre du type substrat standard silico-sodo-calcique a atteint parfaitement sa stabilité dimensionnelle, notamment dans le contexte d'une ligne de production de verre flotté.

De plus, selon ce procédé, on obtient un substrat avec une couche absorbante présentant une couleur bleutée en transmission très reproductible, quelle que soit la zone où est effectué le dépôt sur le ruban de la ligne float.

Enfin, il est à noter qu'un précurseur aminé selon l'invention forme avec le précurseur de zirconium très peu de produit secondaire pulvérulent : la qualité de la couche obtenue est ainsi très largement préservée tout en diminuant la fréquence de nettoyage des dispositifs d'amenée de gaz, sans pour autant diminuer le rendement du procédé.

Le précurseur de zirconium choisi peut avoir avantageusement pour formule chimique ZrRₐX_{b} dans laquelle R et X désignent respectivement un radical alkyl ou cyclique ayant 1 à 6 atomes de carbone et un halogène, la somme de a et b étant égale à 4, avec a et b supérieur ou égal à zéro.

De préférence, il s'agit du tétrachlorure de zirconium ZrCl₄.

Avantageusement, l'amine choisie comprend au plus une liaison N-H. Ainsi, il peut s'agir d'une amine secondaire ou tertiaire, notamment à radicaux alkyls ayant de 1 à 5 atomes de carbone chacun, ramifiés ou linéaires, éventuellement présentant des liaisons insaturées éthyléniques.

L'amine peut être comprise dans un cycle aromatique ou non, telle que la pyridine ou la pipéridine. Il peut également s'agir de la diméthylamine (CH₃)₂ NH, de la diéthylamine, de la dibutylamine. L'amine utilisée selon l'invention peut être également une amine primaire.

Le choix de l'amine appropriée pour une couche d'épaisseur géométrique donnée résulte d'un compromis à trouver entre un certain nombre de paramètres tels que l'encombrement stérique, la réactivité...

De préférence, le rapport en-nombre de moles de la quantité d'aminé sur la quantité de précurseur de zirconium est compris entre 1 et 100, avantageusement compris entre 5 et 50.

Il est en effet important de contrôler un tel rapport pour éviter par exemple une incorporation insuffisante d'azote dans la couche.

La température de dépôt est en adéquation avec le choix des précurseurs, en particulier l'amine. De préférence, elle est comprise entre 500 et 800°C, avantageusement entre 600 et 700°C : c'est-à-dire entre la température où le verre par exemple silico-sodo-calcique est dimensionnellement stable et la température qu'il a à la sortie du bain float.

Il est aussi préférable d'effectuer le dépôt de la couche dans une atmosphère inerte ou réductrice, par exemple en mélange N₂/H₂ sans ou quasiment sans oxygène en continu sur un ruban de verre float, dans l'enceinte de flottage et/ou dans un caisson de contrôle de l'atmosphère inerte, sans oxygène, pour la déposer plus en aval de la ligne float, à des températures éventuellement un peu plus basses.

L'invention permet ainsi la fabrication de vitrages de protection solaire du type filtrant ou bas-émissifs et/ou à fonction miroir en incorporant le substrat recouvert conformément au procédé précité dans un vitrage.

Ces vitrages peuvent être aussi bien monolithiques, feuilletés que multiples tel qu'un double vitrage dans lesquels le(s) substrat(s) est(sont) clair(s) ou teinté(s) dans la masse.

Pour une fonction de protection solaire, ils sont remarquables en ce qu'ils présentent une sélectivité d'au moins 11 %, de préférence supérieure à 13 %.

On précise que dans le cadre de l'invention la sélectivité est égale à la différence T_{L}-F_{S}, où T_{L} est le coefficient de transmission lumineuse et F_{S} le facteur solaire défini comme étant le rapport entre l'énergie totale entrant dans le local ou habitacle à travers le vitrage et l'énergie solaire incidente, facteur mesuré selon la norme ISO 9050.

Une application susceptible d'être particulièrement visée par l'invention est la fabrication de toits en verre, notamment pour véhicule automobile dans la mesure où les vitrages de protection solaire mentionnés ci-dessus présentent avantageusement une réflexion énergétique R_{E} d'au moins 40 % pour une épaisseur géométrique de la couche environ égale à 40 nm.

L'invention permet également la fabrication d'une couche conductrice et barrière à la diffusion des espèces chimiques dans un empilement de couches minces utilisé plus particulièrement en micro-électronique où le substrat est opaque.

En effet, dans cette application où il est nécessaire d'avoir des contacts d'une part peu résistifs et stables d'un point de vue thermique et d'autre part assurant une fonction barrière contre la diffusion d'espèces chimiques, par exemple l'aluminium, le silicium, la couche selon l'invention d'une résistivité très faible (inférieure à 300 µΩ.cm) et présentant une très bonne tenue thermique est particulièrement adaptée.

D'autres détails et caractéristiques avantageuses ressortent ci-après de la description d'exemples de réalisation non limitatifs à l'aide des figures 1, 2, 3, et 4 annexées qui représentent :
- **figure 1** : une coupe transversale d'un substrat verrier muni de la couche 2 selon l'invention,
- **figure 2** : un spectre par diffraction de rayons X du substrat selon la figure 1,
- **figure 3 :** un vitrage à fonction miroir comportant un empilement de couches minces dans lequel a été incorporée la couche selon l'invention,
- **figure 4 :** un vitrage de type protection solaire comportant un empilement de couches minces dans lequel a été incorporée la couche selon l'invention.

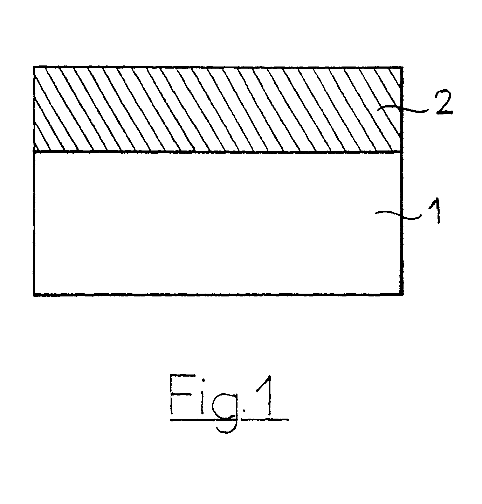

On précise tout d'abord que, par souci de clarté, les figures 1, 3 et 4 ne respectent pas les proportions concernant les épaisseurs relatives des différents matériaux.

Dans tous les exemples suivants, le dépôt de toutes les couches minces est effectué dans l'enceinte de flottage. Les exemples suivants sont réalisés sur un ruban de verre float de 3 mm d'épaisseur pour les exemples 1 à 5, de 6 mm d'épaisseur pour les exemples 6 et 7, verre silico-sodo-calcique clair qui, une fois découpé, est commercialisé par la Société SAINT-GOBAIN VITRAGE sous le nom de Planilux. Il aurait pu tout aussi bien s'agir de verre extra-clair ou de verre teinté dans la masse, comme les verres qui, une fois découpés, sont commercialisés par la Société SAINT-GOBAIN VITRAGE sous les noms de Diamant et Parsol.

### EXEMPLE 1

La figure 1 représente un substrat 1 recouvert de la couche 2 à base de nitrure métallique mise au point par l'invention.

Le dépôt de la couche 2 à base de nitrure métallique a été effectuée par une technique de pyrolyse en phase gazeuse par introduction simultanée à l'aide d'une buse de distribution standard de tétrachlorure de zirconium ZrCl₄, qui est le précurseur de zirconium et de la diméthylamine, qui est le précurseur azoté, sur le substrat de verre 1.

Les précurseurs sont introduits dans la buse à pression et température ambiantes. Il est préférable d'avoir dans la buse deux canaux distincts pour introduire chacun des deux précurseurs qui ne se mélangent qu'à proximité du verre.

Pour s'assurer de manière sûre que la réaction/décomposition des précurseurs ne s'effectue que sur la surface du verre, on préfère avoir entre les deux canaux distincts un troisième canal générant un rideau de gaz inerte du type N₂ qui « sépare » encore pendant quelques millimètres les deux gaz précurseurs à la sortie de la buse.

Le gaz vecteur des deux précurseurs est inerte ou un mélange de 90-100 % de N₂ et 0-10 % de H₂ environ en volume.

Les débits des précurseurs sont choisis tels que le rapport en volume de la quantité de diméthylamine sur la quantité de tétrachlorure de zirconium ZrCl₄ est égal à environ 20. Ce paramètre est avantageux en ce sens qu'il optimise l'apport de chacun des constituants de la couche. En effet, il a été observé qu'il ne doit pas être trop faible sinon il peut y avoir une incorporation insuffisante d'azote dans la couche.

Une plage de rapports de 5 à 50 s'avère tout à fait satisfaisante lorsqu'on veut déposer une couche de 10 à 50 nm d'épaisseur à partir du tétrachlorure de zirconium et de diméthylamine.

La vitesse de défilement du substrat de verre est d'environ 8 à 10 mètres par minute et le substrat est porté à une température comprise entre 550°C et 700°C, à pression atmosphérique.

La couche 2 obtenue telle que réprésentée à la figure 1 a une épaisseur d'environ 40 nanomètres.

On a réalisé une analyse par diffraction de rayon X du substrat 1 ainsi revêtu de la couche 2.

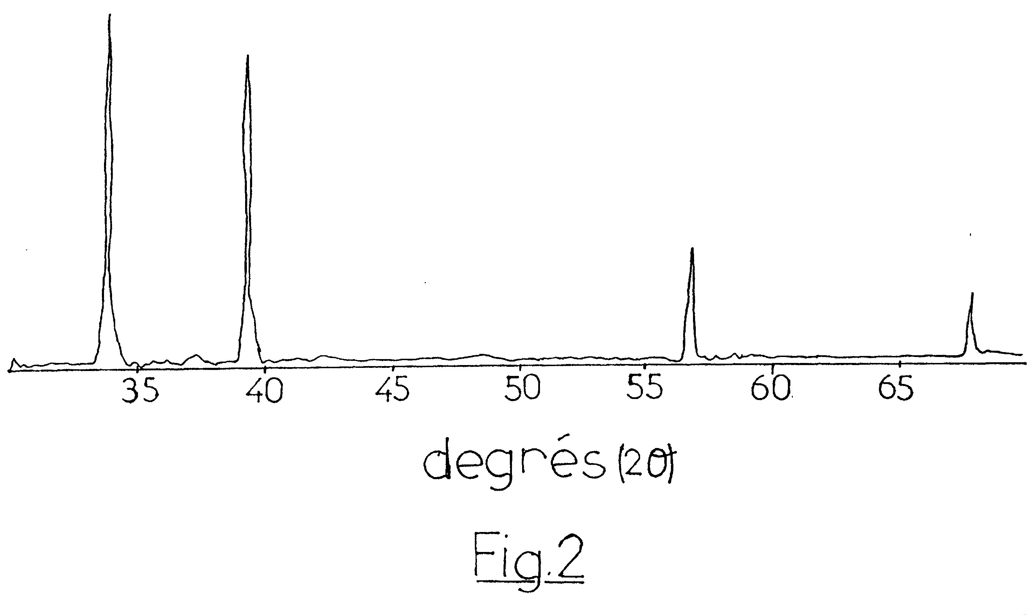

Sur la figure 2 est représenté un spectre relatif à cette analyse. On constate que le spectre de cette figure 2 présente deux pics très importants respectivement à un angle d'environ 34° et 39°, ce qui confirme que la couche 2 est cristallisée au moins en partie. (On précise que la terminologie employée pour la lecture des degrés est pour un angle de 2θ).

Le spectre de diffraction de référence de la phase ZrN métallique tiré de la fiche JCPPS (35-753) indique des valeurs d'angles pour les pics, quasiment identiques.

Cependant, il est connu du document « Chemical Materials », 1991, pages 1138-1148 que le nitrure de zirconium peut se présenter sous une autre forme, la phase Zr₃N₄ isolante.

La couche mince 2 comprend donc soit du nitrure de zirconium isolant Zr₃N₄, soit du nitrure de zirconium métallique ZrN, soit un mélange des deux.

Pour connaître la proportion entre chaque phase, on a mesuré la résistivité électrique de la couche : elle est égale à environ 180 µΩ.cm.

On en déduit donc que la couche mince 2 comprend majoritairement du nitrure de zirconium métallique ZrN au moins en partie cristallisé.

Les exemples suivants 2 et 3 concernent des substrats verriers à fonction miroir :

### EXEMPLE 2

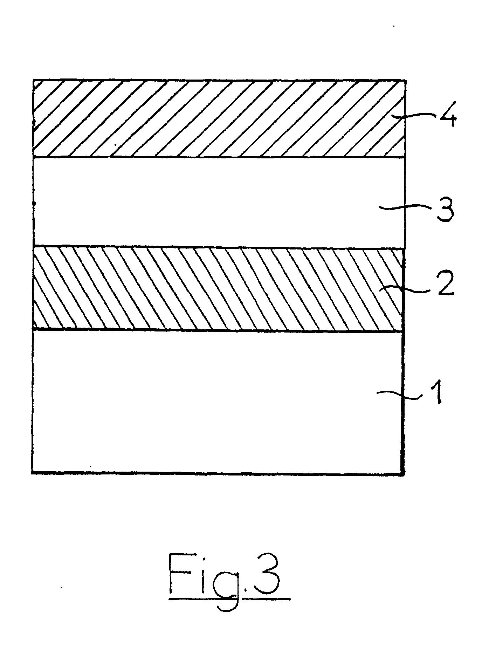

La figure 3 représente un vitrage de type miroir comportant un empilement de couches minces dans lequel a été incorporée la couche 2 selon l'invention.

Le substrat 1 est recouvert de trois couches successivement :
- une première couche 2 selon l'invention d'épaisseur environ égale à 120 nm déposée dans les mêmes conditions que l'exemple 1,
- une deuxième couche 3 en oxycarbure de silicium SiOC d'épaisseur 30 nm, d'indice de réfraction égal à 1,6 obtenue également par pyrolyse en phase gazeuse à partir de silane et d'éthylène, comme décrit dans la demande de brevet EP 0 518 755,
- une troisième couche 4 en dioxyde de titane TiO₂ d'épaisseur 40 nm, d'indice de réfraction 2,3 obtenue par pyrolyse en phase liquide à partir d'un chélate de titane et d'une poudre ou dispersion colloïdale de particules d'oxyde de titane cristallisé sous forme anatase ou anatase/rutile comme décrit dans la demande de brevet FR 2 738 812.

On a donc un empilement de type :
Verre/ZrN/SiOC/TiO₂

### EXEMPLE 3

On a réalisé cet exemple comparatif utilisant un empilement :
Verre/TiN/SiOC/TiO₂
empilement dans lequel :
- la couche de TiN d'épaisseur 120 nm est obtenue par pyrolyse en phase gazeuse à partir d'un tétrachlorure de titane TiCl₄ et de la méthylamine CH₃NH₂ tel que décrit dans la demande de brevet EP 0 638 527.

Ces types de substrats revêtus peuvent être utilisés en miroir « face 1 » ou « face 2 », de préférence en tant que miroir « face 1 ».

On a ensuite mesuré pour chacun de ces exemples 2 et 3 les valeurs spectrophotométriques, notamment la valeur de réflexion lumineuse R_{L} des substrats en pourcentage selon l'illuminant D₆₅ ainsi que la longueur d'onde dominante en réflexion λ_{D} (R_{L}) en nm, la pureté pₑ en réflexion en pourcentage.

Dans chacun de ces deux exemples, la transmission lumineuse résiduelle est inférieure à 2 %.

Les résultats ont été regroupés dans le tableau 1 ci-dessous :

**TABLEAU 1**

| | R_{L} | pₑ | λ_{D} |
|---|---|---|---|
| **EXEMPLE 2** | 83 | 1,4 | 543 |
| **EXEMPLE 3** | 78 | 1,3 | 574 |

Les exemples 4 et 5 suivants concernent des substrats destinés à faire partie de vitrages de protection solaire à bas niveau de transmission lumineuse.

### EXEMPLE 4

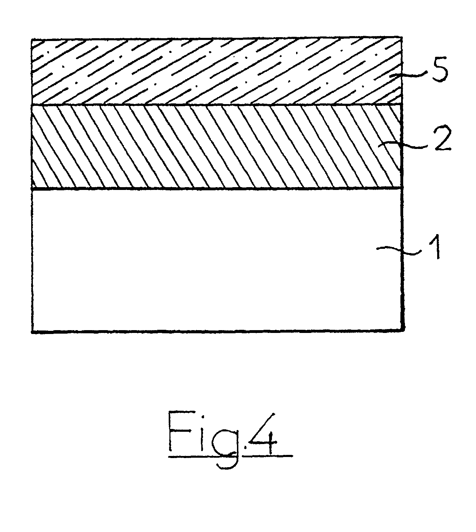

La figure 4 représente un substrat comportant un empilement de couches dans lequel a été incorporée la couche selon l'invention.

Le substrat 1 est recouvert de deux couches successivement :
- une première couche 2 selon l'invention d'épaisseur environ égale à 39 nm déposée dans les mêmes conditions que l'exemple 1,
- une deuxième couche 5 en oxycarbure de silicum SiOC d'épaisseur 30 nm d'indice de réfraction égal à 1,65, obtenue par pyrolyse en phase gazeuse à partir de silane et d'éthylène comme décrit dans la demande de brevet EP 0 518 755.

On a donc un empilement de type :
Verre/ZrN/SiOC

### EXEMPLE 5

On a réalisé cet exemple comparatif utilisant la séquence de couches suivante (les épaisseurs géométriques sont précisées sous chacune des couches, exprimées en nanomètres) :
Verre/TiN/SiOC
60 nm 30 nm
séquence dans laquelle TiN est obtenue dans les mêmes conditions de dépôt que l'exemple 3 et SiOC dans les mêmes conditions de dépôt que l'exemple 4.

L'indice de réfraction de SiOC est égal à 1,65.

On a ensuite mesuré pour-chacun de ces exemples 4 et 5 les valeurs spectrophotométriques « côtés couches », notamment les valeurs de transmission lumineuse T_{L} et de réflexion énergétique R_{E} selon l'illuminant D₆₅.

Les résultats ont été regroupés dans le tableau 2 ci-dessous.

**TABLEAU 2**

| | T_{L} | R_{E} |
|---|---|---|
| **EXEMPLE 4** | 25 | 60 |
| **EXEMPLE 5** | 25 | 34,7 |

Les derniers exemples 6 et 7 concernent des substrats destinés à faire partie de vitrages de protection solaire à haut niveau de transmission lumineuse dans lesquels la séquence est la suivante :

### EXEMPLE 6

Verre/ZrN/SiOC
15 nm 64 nm

### EXEMPLE 7

Verre/TiN/SiOC
13 nm 70 nm

Les couches en ZrN, TiN et SiOC sont obtenues dans les mêmes conditions de dépôt que celles relatives aux exemples précédents 4 et 5.

La surcouche en SiOC a pour ces deux exemptes 6 et 7 les mêmes indices de réfraction égal à 1,66.

Les substrats recouverts des couches, relatifs à ces exemples 6 et 7, sont montés en double-vitrage en les espaçant d'un autre substrat de verre silico-sodo-calcique de 6 millimètres d'épaisseur par l'intermédiaire d'une lame d'air de 12 millimètres d'épaisseur.

On précise que les couches minces se trouvent de préférence en face 2 une fois le double-vitrage monté dans un bâtiment.

(On rappelle que, conventionnellement, on numérote les faces d'un vitrage multiple à partir de la face la plus extérieure au bâtiment).

Le tableau 3 ci-dessous regroupe pour chacun des doubles vitrages correspondant aux exemples 6 et 7 les valeurs de T_{L}, R_{L}, en pourcentages a*, b* mesurées selon l'illuminant D₆₅ ainsi que celle du facteur solaire (F_{S}) en pourcentage mesurée selon la norme ISO 9050 et la valeur de la sélectivité S calculée en faisant la différence T_{L} - F_{S} (représentative de la capacité du substrat à filtrer le rayonnement énergétique).

**TABLEAU 3**

| | T_{L} | F_{S} | S | R_{L} | a* | b* |
|---|---|---|---|---|---|---|
| **EXEMPLE 6** | 61 | 48 | 13 | 20 | -2,1 | -4,0 |
| **EXEMPLE 7** | 62 | 52 | 10 | 18 | -4,7 | 0,5 |

De tous ces résultats, on peut tirer les conclusions suivantes :
→ quelle que soit l'application visée, la couche mince à base de nitrure de zirconium métallique selon l'invention confère à un substrat verrier des performances énergétiques et optiques améliorées par rapport à ce même substrat revêtu d'une couche mince à base de nitrure de titane.
→ En particulier, à faible épaisseur, c'est-à-dire pour un substrat destiné à faire partie d'un vitrage de protection solaire, la couche mince selon l'invention amène :
   - pour un niveau de transmission lumineuse donné et élevé, une meilleure sélectivité (augmentée de 3 % par rapport à une couche de nitrure de titane),
   - pour un faible niveau de transmission lumineuse une réflexion énergétique fortement augmentée pour une épaisseur moindre, ce qui est très avantageux d'un point de vue coût de matières premières.
→ De même, à épaisseur plus importante, c'est-à-dire pour un substrat destiné à jouer le rôle de miroir, elle donne au substrat verrier un aspect en réflexion bien plus neutre avec une pureté bien moindre.

Ainsi, l'invention a mis au point une nouvelle couche à base de nitrure métallique présentant des performances énergétiques et optiques améliorées par rapport aux couches de nitrure métallique connues.

Très avantageusement, la couche de nitrure de zirconium selon l'invention peut se déposer par pyrolyse en phase gazeuse à l'aide d'un précurseur azoté que l'on peut utiliser industriellement.

Le précurseur azoté est en outre d'une réactivité adéquate car il permet d'atteindre des températures de dépôt à partir desquelles il est possible sans difficulté majeure de réaliser des empilements de couches en ligne sur le ruban de verre float.

## Revendications

1. Procédé de dépôt d'au moins une couche mince (2) à base de nitrure de zirconium réfléchissant au moins une partie du rayonnement solaire sur un substrat verrier par une technique de pyrolyse en phase gazeuse à partir d'au moins un précurseur de zirconium et au moins un précurseur d'azote, ***caractérisé en ce qu'au*** moins un précurseur d'azote est sous la forme d'une amine secondaire ou tertiaire, ***et en ce que*** l'épaisseur de ladite couche est inférieure à 80 nm.

2. Procédé selon la revendication précédente ***caractérisé en ce* que** tout amine dans la phase gazeuse est choisie parmi les amines secondaires ou tertiaires.

3. Procédé selon la revendication 1, ***caractérisé en ce que*** ledit précurseur de zirconium a pour formule chimique ZrRₐX_{b} dans laquelle R et X désignent respectivement un radical alkyl ou cyclique ayant 1 à 6 atomes de carbone et un halogène, la somme de a et b étant égale à 4, avec a et b supérieur ou égal à zéro.

4. Procédé selon la revendication 1, ***caractérisé en ce que*** ledit précurseur de zirconium est le tétrachlorure de zirconium (ZrCl₄).

5. Procédé selon l'une des revendications précédentes, ***caractérisé en ce que*** l'amine est une amine secondaire ou tertiaire à radicaux alkyls ayant de 1 à 5 atomes de carbone chacun.

6. Procédé selon l'une des revendications précédentes, ***caractérisé en ce que*** l'amine est comprise dans un cycle aromatique ou non, telle que la pyridine ou la pipéridine.

7. Procédé selon l'une des revendications 1 à 5, ***caractérisé en ce que*** l'amine est la diméthylamine (CH₃)₂NH, la déthylamine, la dibutylamine.

8. Procédé selon l'une des revendications précédentes, ***caractérisé en ce que*** la température de dépôt est choisie entre 500 et 800°C, de préférence entre 600 et 700°C.

9. Procédé selon l'une des revendications précédentes, ***caractérisé en ce que*** l'on effectue le dépôt de ladite couche mince, dans une atmosphère essentiellement inerte ou hydrogénée, sans oxygène, en continu sur un ruban de verre float, dans l'enceinte de flottage et/ou dans un caisson de contrôle de l'atmosphère inerte ou réductrice.

10. Procédé selon l'une des revendications précédentes, ***caractérisé en ce qu'on*** dépose une couche de nitrure de zirconium d'une épaisseur comprise entre 10 et 50 nm.

11. Procédé selon l'une des revendications précédentes, ***caractérisé en ce que*** le rapport molaire de la quantité d'amine sur la quantité de précurseur de zirconium est compris entre 5 et 50.

12. Procédé selon l'une des revendications précédentes, ***caractérisé en ce que*** la couche de nitrure de zirconium confère au substrat une couleur bleutée en transmission.

13. Procédé selon l'une des revendications précédentes, ***caractérisé en ce qu'on*** utilise une buse de distribution des précurseurs, la buse ayant deux canaux distincts pour introduire le précurseur de zirconium d'une part et le précurseur d'azote d'autre part, ainsi qu'un troisième canal générant un rideau de gaz inerte afin de séparer les deux gaz précurseurs à la sortie de la buse.

14. Procédé selon l'une des revendications précédentes, ***caractérisé en ce qu'on*** dépose au-dessus de la couche (2) de nitrure de zirconium une surcouche en oxyde, oxycarbure, nitrure, oxynitrure ou oxycarbure de silicium.

15. Procédé selon la revendication 13, ***caractérisé en ce que*** la surcouche a une épaisseur géométrique comprise entre 5 et 200 ou entre 20 et 120 nm.

16. Procédé selon l'une des revendications précédentes, ***caractérisé en ce qu'on*** dépose au-dessus de la couche (2) de nitrure de zirconium, une surcouche à base de TiO₂ à propriétés photocatalytiques, antibuée et/ou antisalissure.

17. Application du procédé selon l'une des revendications précédentes à la fabrication de vitrages de protection solaire du type filtrants ou bas-émissifs.

18. Application selon la revendication précédente ***caractérisé en ce que*** le vitrage présente une sélectivité d'au moins 11 %.

19. Application selon la revendication précédente ***caractérisé en ce que*** le vitrage présente une sélectivité supérieure à 13 %.

20. Application du procédé selon l'une des revendications 1 à 16 à la fabrication de toits en verre notamment pour véhicule automobile.

21. Application du procédé selon l'une des revendications 1 à 16 à la fabrication de vitrages monolithiques, feuilletés ou multiples, dans lesquels le(s) substrat(s) est (sont) clair(s) ou teinté(s) dans la masse.

22. Application du procédé selon l'une des revendications 1 à 16 à la fabrication d'une couche conductrice et barrière à la diffusion des espèces chimiques dans un empilement de couches minces utilisé en micro-électronique.

## Patentansprüche

1. Verfahren zum Aufbringen mindestens einer dünnen Schicht (2) auf der Basis von Zirconiumnitrid, die wenigstens einen Teil der Sonneneinstrahlung reflektiert, durch ein Verfahren der Pyrolyse aus der Gasphase ausgehend von mindestens einem Zirconiumvorläufer und mindestens einem Stickstoffvorläufer auf ein aus Glas bestehendes Substrat, **dadurch gekennzeichnet, dass** mindestens ein Stickstoffvorläufer in Form eines sekundären oder tertiären Amins vorliegt, **und dass** die Dicke dieser Schicht weniger als 80 nm beträgt.

2. Verfahren nach dem vorhergehenden Anspruch, **dadurch gekennzeichnet, dass** das gesamte in der Gasphase befindliche Amin aus sekundären oder tertiären Aminen ausgewählt ist.

3. Verfahren nach Anspruch 1, **dadurch gekennzeichnet, dass** der Zirconiumvorläufer die chemische Formel ZrRₐX_{b} besitzt, in welcher R und X einen cyclischen oder Alkylrest mit 1 bis 6 Kohlenstoffatomen bzw. ein Halogenatom bedeuten, wobei die Summe aus a und b gleich 4 ist, mit a und b größer oder gleich Null.

4. Verfahren nach Anspruch 1, **dadurch gekennzeichnet, dass** der Zirconiumvorläufer Zirconiumtetrachlorid (ZrCl₄) ist.

5. Verfahren nach einem der vorhergehenden Ansprüche, **dadurch gekennzeichnet, dass** das Amin ein sekundäres oder tertiäres Amin mit Alkylresten mit jeweils 1 bis 5 Kohlenstoffatomen ist.

6. Verfahren nach einem der vorhergehenden Ansprüche, **dadurch gekennzeichnet, dass** das Amin in einem gegebenenfalls aromatischen Cyclus wie Pyridin oder Piperidin enthalten ist.

7. Verfahren nach einem der Ansprüche 1 bis 5, **dadurch gekennzeichnet, dass** das Amin Dimethylamin, (CH₃)₂NH, Diethylamin und Dibutylamin ist.

8. Verfahren nach einem der vorhergehenden Ansprüche, **dadurch gekennzeichnet, dass** die Abscheidetemperatur zwischen 500 und 800 °C und vorzugsweise zwischen 600 und 700 °C gewählt wird.

9. Verfahren nach einem der vorhergehenden Ansprüche, **dadurch gekennzeichnet, dass** das Abscheiden der dünnen Schicht in einer sauerstofffreien im Wesentlichen inerten oder wasserstoffhaitigen Atmosphäre kontinuierlich auf einem Floatglasband in der Floatglaswanne und/oder in einem Behälter für die Kontrolle der inerten oder reduzierenden Atmosphäre erfolgt.

10. Verfahren nach einem der vorhergehenden Ansprüche, **dadurch gekennzeichnet, dass** eine Zirconiumnitridschicht mit einer Dicke von 10 bis 50 nm abgeschieden wird.

11. Verfahren nach einem der vorhergehenden Ansprüche, **dadurch gekennzeichnet, dass** das Molverhältnis von Aminmenge zur Menge an Zirconiumvorläufer 5 bis 50 beträgt.

12. Verfahren nach einem der vorhergehenden Ansprüche, **dadurch gekennzeichnet, dass** die Zirconiumnitridschicht dem Substrat eine in Durchsicht bläuliche Farbe verleiht.

13. Verfahren nach einem der vorhergehenden Ansprüche, **dadurch gekennzeichnet, dass** für die Vorläufer eine Verteilerdüse verwendet wird, die zwei verschiedene Kanäle für die Zufuhr des Zirconiumvorläufers einerseits und des Stickstoffvorläufers andererseits sowie einen dritten Kanal, der einen Inertgasschleier erzeugt, um am Düsenausgang die beiden Vorläufergase voneinander zu trennen, besitzt.

14. Verfahren nach einem der vorhergehenden Ansprüche, **dadurch gekennzeichnet, dass** auf der Zirconiumnitridschicht (2) eine Deckschicht aus Siliciumoxid, -carbidoxid, -nitrid, -nitridoxid oder -nitridcarbidoxid abgeschieden wird.

15. Verfahren nach Anspruch 13, **dadurch gekennzeichnet, dass** die geometrische Dicke der Deckschicht 5 bis 200 oder zwischen 20 und 120 nm beträgt.

16. Verfahren nach einem der vorhergehenden Ansprüche, **dadurch gekennzeichnet, dass** auf der Zirconiumnitridschicht (2) eine Deckschicht auf der Basis von TiO₂ mit photokatalytischen, Beschlag verhindernden und/oder Schmutz abweisenden Eigenschaften abgeschieden wird.

17. Anwendung des Verfahrens nach einem der vorhergehenden Ansprüche auf die Herstellung filternder oder niedrig emittierender Sonnenschutzgläser.

18. Anwendung nach dem vorhergehenden Anspruch, **dadurch gekennzeichnet, dass** die Selektivitätskennzahl des Glases mindestens 11 % beträgt.

19. Anwendung nach dem vorhergehenden Anspruch, **dadurch gekennzeichnet, dass** die Selektivitätszahl des Glases mehr als 13 % beträgt.

20. Anwendung des Verfahrens nach einem der Ansprüche 1 bis 16 auf die Herstellung von insbesondere für Kraftfahrzeuge bestimmten Glasdächern.

21. Anwendung des Verfahrens nach einem der Ansprüche 1 bis 16 auf die Herstellung von monolithischen, Verbund- oder Mehrfachgläsern, in welchen das/die Substrat/e klar oder in der Masse gefärbt ist/sind.

22. Anwendung des Verfahrens nach einem der Ansprüche 1 bis 16 auf die Herstellung einer leitfähigen und eine Barriere gegen die Diffusion chemischer Spezies bildenden Schicht, in einem Aufbau aus dünnen Schichten, der in der Mikroelektronik verwendet wird.

## Claims

1. Process for depositing at least one zirconium nitride-based film (2) reflecting at least part of the solar radiation on a glass substrate by a chemical vapour deposition method based on at least one zirconium precursor and at least one nitrogen precursor, **characterized in that** at least one nitrogen precursor is in the form of a secondary or tertiary amine and **in that** the thickness of said film is less than 80 nm.

2. Process according to the preceding claim, **characterized in that** any amine in the vapour phase is chosen from among secondary or tertiary amines.

3. Process according to claim 1, **characterized in that** said zirconium precursor has the formula ZrRₐX_{b} in which R and X respectively designate an alkyl or cyclic radical having 1 to 6 carbon atoms and a halogen, the sum of a and b being equal to 4, with a and b being equal to or exceeding zero.

4. Process according to claim 1, **characterized in that** said zirconium precursor is zirconium tetrachloride (ZrCl₄).

5. Process according to one of the preceding claims, **characterized in that** the amine is a secondary or tertiary amine with alkyl radicals having 1 to 5 carbon atoms each.

6. Process according to one of the preceding claims, **characterized in that** the amine may or may not be included in an aromatic cycle, such as pyridine or piperidine.

7. Process according to one of the claims 1 to 5, **characterized in that** the amine is dimethyl amine (CH₃)₂NH, diethyl amine or dibutyl amine.

8. Process according to one of the preceding claims, **characterized in that** the deposition temperature is chosen between 500 and 800°C, preferably between 600 and 700°C.

9. Process according to one of the preceding claims, **characterized in that** the deposition of the film takes place in an oxygen-free, essentially inert or hydrogen-containing atmosphere in continuous manner on a float glass ribbon, in the float enclosure and/or in an inert or reducing atmosphere control chamber.

10. Process according to one of the preceding claims, **characterized in that** a zirconium nitride film with a thickness between 10 and 50 nm is deposited.

11. Process according to one of the preceding claims, **characterized in that** the molar ratio of the amine quantity to the zirconium precursor quantity is between 5 and 50.

12. Process according to one of the preceding claims, **characterized in that** the zirconium nitride film gives the substrate a bluish colour in transmission.

13. Process according to one of the preceding claims, **characterized in that** a precursor distribution nozzle is used, the nozzle having two separate channels for introducing the zirconium precursor on the one hand and the nitrogen precursor on the other, as well as a third channel producing an inert gas curtain in order to separate the two precursor gases on leaving the nozzle.

14. Process according to one of the preceding claims, **characterized in that** above the zirconium nitride film (2) is deposited a silicon oxide, oxycarbide, nitride, oxynitride or oxycarbide overfilm.

15. Process according to claim 13, **characterized in that** the overfilm has a geometrical thickness between 5 and 200 or between 20 and 120 nm.

16. Process according to one of the preceding claims, **characterized in that** deposition takes place above the zirconium nitride film (2) of an overfilm based on TiO₂ having photocatalytic, demisting and/or anti-dirtying properties.

17. Application of the process according to one of the preceding claims to the manufacture of solar protection glazings of the filtering or low-emissive type.

18. Application according to the preceding claim, **characterized in that** the glazing has a selectivity of at least 11%.

19. Application according to the preceding claim, **characterized in that** the glazing has a selectivity above 13%.

20. Application of the process according to one of the claims 1 to 16 to the manufacture of glass roofs, particularly for cars.

21. Application of the process according to one of the claims 1 to 16 to the manufacture of monolithic, laminated or multiple glazings, in which the substrate or substrates are clear or tinted in the mass.

22. Application of the process according to one of the claims 1 to 16 to the manufacture of a film which is conductive and a barrier to the diffusion of chemical species into a stack of films used in microelectronics.
